Europäisches Patentamt

European Patent Office

Office européen des brevets

(11) Veröffentlichungsnummer: **0 322 709**
**A2**

## EUROPÄISCHE PATENTANMELDUNG

(21) Anmeldenummer: 88121284.9

(22) Anmeldetag: 20.12.88

(51) Int. Cl.⁴: **B65D 47/34 , B65D 83/00**

(30) Priorität: 24.12.87 DE 8716940 U
27.08.88 DE 3829080

(43) Veröffentlichungstag der Anmeldung:
05.07.89 Patentblatt 89/27

(84) Benannte Vertragsstaaten:
**AT BE CH DE ES FR GB GR IT LI LU NL SE**

(71) Anmelder: **WEIDENHAMMER PACKUNGEN KG GMBH & CO**
**Industriegebiet Talhaus**
**D-6832 Hockenheim(DE)**

(72) Erfinder: **Kücherer, Helmut**
**Dr.-Hermann-Brunn-Str. 49**
**D-6905 Schriesheim(DE)**

(74) Vertreter: **Dr.-Ing. Hans Lichti Dipl.-Ing. Heiner Lichti Dipl.-Phys. Dr. Jost Lempert**
**Postfach 41 07 60 Durlacher Strasse 31**
**D-7500 Karlsruhe 41(DE)**

(54) Verpackung zur Abgabe fliessfähiger Produkte.

(57) Eine Verpackung zur Abgabe fließfähiger Produkte besteht aus einem das Produkt aufnehmenden Behälter mit einem Verschluß und einer wiederverwendbaren Abgabeeinrichtung, die eine nach dem Öffnen des Verschlusses auf den Behälter dichtend aufsetzbare Kappe aufweist. Der Behälter besteht aus einer Hülse aus Karton- bzw. Papierverbundmaterial mit vorzugsweise wenigstens einer Flüssigkeitsperrschicht und einer wenigstens innenseitig angeordneten siegelfähigen Kunststoffschicht, einem an die Hülse angesiegelten Boden und einer an der gegenüberliegenden Stirnseite angesiegelten Verschlußmembran, die ganz oder teilweise zu öffnen ist. Die Abgabeeinrichtung ist mittels der Kappe an der Stirnseite der Hülse festlegbar.

EP 0 322 709 A2

## Verpackung zur Abgabe fließfähiger Produkte

Die Erfindung betrifft eine Verpackung zur ·Abgabe fließfähiger Pordukte, bestehend aus einem das Produkt aufnehmenden Behälter mit einem Verschluß und einer wiederverwendbaren Abgabeeinrichtung, die eine nach dem Öffnen des Verschlusses auf den Behälter dichtend aufsetzbare Kappe aufweist.

Eine Vielzahl fließfähiger, z. B. rieselfähiger, flüssiger und pastöser Produkte werden heute in Verpackungen angeboten, aus denen heraus sie unmittelbar dosiert, ausgestreut, ausgedrückt oder versprüht werden können. Als Beispiele für diese Produkte seien Kosmetika, Arzneimittel, Nahrungs- und Würzmittel, Reinigungs- und Pflegemittel sowie Farben und Lacke erwähnt. Weite Verbreitung haben dabei Aerosoldosen gefunden, die als dichte Verpackungen aus Metall oder Kunststoff ausgebildet und neben dem eigentlichen Verbrauchsprodukt ein Treibgas oder eine gaserzeugende Komponente enthalten. Vielfach werden auch schon als Abgabeeinrichtung mechanische Sprüheinrichtungen verwendet, die nach Art einer Pumpe ohne Treibgas arbeiten. Sie werden auf den Behälter, der aus Glas, Kunststoff oder Metall besteht, aufgesetzt. Zu diesem Zweck weist der Behälter beispielsweise einen Hals mit Außengewinde auf, auf den eine an der Sprüheinrichtung angeordnete Kappe mit Innengewinde dichtend aufschraubbar ist. Die Sprüheinrichtung weist ferner ein Tauchrohr auf, das bis auf den Boden des Behälters reicht. Durch eine mittels der Finger, insbesondere mit dem Daumen, betätigbaren Pumpe wird die Flüssigkeit angesaugt oder in das Tauchrohr hineingedrückt und einer Zerstäubungsdüse zugeführt.

Es ist ferner, insbesondere zur Abgabe pastöser Produkte, bekannt, die gleichfalls nach Art einer Pumpe arbeitende Abgabeeinrichtung als wiederverwendbares Teil vorzusehen und nach Leerung eines Behälters auf einen neuen, gefüllten Behälter aufzuschrauben. Hier erfolgt allerdings keine zerstäubende, sondern eine portionsweise Abgabe des Produktes.

Alle bekannten Verpackungen des vorgenannten Aufbaus haben den Nachteil, daß zumindest der aus Kunststoff, Metall bzw. Glas bestehende Behälter bei der Abfallbeseitigung einen großen Raumbedarf hat und sich nicht oder nur mit größerem Aufwand wieder-aufarbeiten läßt. Auch sind die Grundstoffe zur Herstellung solcher Behälter relativ teuer bzw. die zu ihrer Erzeugung notwendigen Energiekosten sehr hoch.

Bei aufwendigen und teuren Sprühgeräten, z. B. Farb- und Lackspritzpistolen, ist es bekannt (DE-C-35 17 122), das Sprühgerät mit einer Aufnahme zu versehen, die einen Behälter mit der zu versprühenden Flüssigkeit aufnimmt. Der Behälter ist als Einwegverpackung aus Kunststoff oder Pappe ausgebildet. Die Aufnahme weist einen Dorn mit einer Ansaugbohrung auf. Der Behälter wird so in die Aufnahme eingesetzt, daß der Dorn den Behälterboden durchsticht und die Flüssigkeit der Spritzpistole zufließen kann. Dabei läßt sich kein flüssigkeitsdichter Anschluß herstellen. In einer anderen Ausführungsform, die einen dichten Anschluß ermöglicht, ist der Behälter an seinem Boden mit einem konstruktiv aufwendigen Ventil versehen, das mittels des Dorns an der Aufnahme geöffnet werden kann. Wegen der aufwendigen Konstruktion des Bodenventils ist der Behälter teuer und soll deshalb wiederverwendbar sein, d. h. wieder nachgefüllt werden, was eine entsprechende Konstruktion des Behälterdeckels voraussetzt.

Der Erfindung liegt die Aufgabe zugrunde, eine Verpackung der eingangs genannten Art so auszubilden, daß sie kostengünstig herstellbar ist, gleichwohl aufwendige und funktionell optimierte Abgabeeinrichtungen eingesetzt werden können. Die Verpackung soll ferner nach dem Verbrauch des Produktes zumindest zum größten Teil einer problemlosen Abfallbeseitigung oder einer Wiederverwertung zugeführt werden können. Ferner soll der Behälter so ausgebildet sein, daß er mit beliebigen Abgabeeinrichtungen von gegebenenfalls aufwendiger Bauart kombiniert werden kann und unabhängig vom Füllgut eine einwandfreie und verlustlose Entleerung gestattet.

Diese Aufgabe wird erfindungsgemäß dadurch gelöst, daß der Behälter aus einer Hülse aus Karton- bzw. Papierverbundmaterial und wenigstens einer innenseitig angeordneten siegelfähigen Kunststoffschicht, einem an die Hülse innenseitig angesiegelten Boden und einer an der gegenüberliegenden Stirnseite angesiegelten Verschlußmembran, die ganz oder teilweise zu öffnen ist, besteht, und daß die Abgabeeinrichtung mittels der Kappe an der Stirnseite der Hülse festlegbar ist.

Verpackungen aus Kartonverbundmaterial werden zwar in großen Mengen eingesetzt, dienen jedoch in erster Linie zum Verpacken schüttfähiger Produkte, wie Pulver od. dgl., oder auch teigiger bis pastöser Produkte, wie Konfitüren etc., seltener für Flüssigkeiten, wie Säfte od. dgl. Aufgrund ihrer mangelnden Formstabilität und der Schwierigkeit der Anbringung eines lösbaren, zugleich aber dichten Verschlusses, sind solche Karton- bzw. Papierverbundbehälter bisher nicht für Verpackungen mit Abgabeeinrichtungen, insbesondere Dosiereinrichtungen, Sprüheinrichtungen od. dgl., eingesetzt worden. Das Problem der Anbringung eines lösbaren Verschlusses oder gar einer Abgabeeinrichtung, z. B. einer Sprüh- oder Pumpeinrichtung, ergibt sich weiterhin daraus, daß die aus dem Karton- oder Papierverbund bestehende Hülse über ihre gesamte Höhe querschnittsgleich ausgebildet ist und nicht mit einem Außengewinde od. dgl. versehen werden kann, um die Abgabe- bzw. Sprüheinrichtung aufsetzen zu können. Hier schafft die Erfindung wirksam Abhilfe, indem der Behälter nicht einen lösbaren Verschluß aufweist, sondern eine angesiegelte Verschlußmembran, die erst bei Ingebrauchnahme ganz oder teilweise geöffnet wird, während die Kappe der Abgabeeinrichtung an der Stirnseite des Behälters festlegbar ist.

Das Füllgut kann also in einem dicht versiegelten Behälter einfachsten und preiswertesten Aufbaus abgefüllt, gelagert und angeboten werden und die Abgabeeinrichtung problemlos mit dem Behälter in Verbindung gebracht werden. Nach Leerung des Behälters wird die Abgabeeinrichtung abgenommen und auf einen neuen Behälter mit angesiegelter Verschlußmembran aufgesetzt. Die Abgabeeinrichtung ist also wiederverwendbar, während der geleerte Behälter weggeworfen wird. Aufgrund seiner geringen Formstabilität, insbesondere im entleerten Zustand, läßt sich der Behälter problemlos zusammendrücken und beansprucht somit wenig Raum. Bei der Abfallbeseitigung, beispielsweise in Müllverbrennungsanlagen, kann der größte Teil des Behälters, nämlich die gesamte Hülse aus Karton- bzw. Papierverbundmaterial, verbrannt und in Wärmeenergie umgesetzt werden.

Die Abgabeeinrichtung kann als handbetätigte Dosiereinrichtung, z. B. in Form einer Streueinrichtung, einer Sprüheinrichtung od. dgl. ausgebildet sein. Im Falle flüssiger oder pastöser Füllgüter ist die Hülse aus Karton-oder Papierverbundmaterial mit einer beispielsweise metallischen Sperrschicht, z. B. aus einer Metallfolie, versehen. In diesem Fall ist ferner vorgesehen, daß die Abgabeeinrichtung eine Sprüheinrichtung mit einer Handpumpe ist, die ein bis nahe zum Boden reichendes Tauchrohr aufweist.

Eine bevorzugte Ausführungsform zeichnet sich dadurch aus, daß die Verschlußmembran eine vorbereitete, aufbrechbare Öffnung aufweist. Diese Öffnung wird vor oder während des Verbindens der Abgabeeinrichtung mit dem Behälter aufgebrochen, so daß das Füllgut mit der Abgabeeinrichtung entnommen werden kann.

Die Verschlußmembran und/oder der Boden können aus einer Metallfolie mit wenigstens einer innenseitig angeordneten, siegelfähigen Kunststoffschicht bestehen. Diese Ausführungsform hat den Vorteil, daß der Behälter ein geringes Gewicht aufweist und flüssigkeits- bzw. gasdicht (aromadicht) ausgebildet werden kann.

Statt dessen kann vorgesehen sein, daß die Verschlußmembran und/oder der Boden aus einem Karton- oder Papierverbundmaterial mit wenigstens einer innenseitig angeordneten, siegelfähigen Kunststoffschicht besteht. Durch diese Maß nahme wird der Metallanteil weiter gesenkt und der verbrennungsfähige Anteil bei der energiegewinnenden Abfallverwertung erhöht. Für den Fall notwendiger Flüssigkeits-oder Gasdichtheit kann auch bei dieser Ausführung eine metallische Sperrschicht vorgesehen sein.

Die Verschlußmembran und/oder der Boden ist vorzugsweise nach innen in die Hülse eingezogen und innen- und außenseitig an die Hülse angesiegelt.

In weiterhin vorteilhafter Ausbildung ist der Boden des Behälters zum Zentrum hin zu einer Senke geneigt. Im Falle der Ausbildung der Abgabeeinrichtung als Sprüheinrichtung kann das Tauchrohr bis in die Senke reichen, so daß bei aufrechter Lage des Behälters eine vollständige Leerung sichergestellt ist. Das Tauchrohr kann aber auch mit Abstand über der Senke enden, um das Ansaugen von Sedimenten zu vermeiden. Im übrigen trägt diese Formgebung des Bodens zu dessen Stabilisierung bei, was insbesondere von Bedeutung ist, wenn er von einer Metallfolie gebildet ist.

Da auch die den Boden bildende Membran möglichst dünnwandig - im Bereich einiger $\mu$m - sein sollte, kann sie ferner zur Stabilisierung und zur Vermeidung unkontrollierter Ausbauchungen beim Abfüllen und/oder beim Schütteln des Inhaltes mit einer im wesentlichen radialen Prägung versehen sein.

Verpackungen mit einer Hülse aus Karton- bzw. Papierverbundmaterial haben, insbesondere wenn sie eine geringe Wandstärke aufweisen, den Nachteil einer nur geringen Formstabilität. Runde Hülsen neigen zum Ovalisieren. Dies macht die Verpackung unansehnlich und erschwert das Aufsetzen des Spendereinsatzes oder macht dies gar unmöglich. Um dies zu vermeiden, ist vorgesehen, daß in die Hülse vor die Verschlußmembran eine querschnittsgleiche, deckelseitige Pappescheibe eingesetzt ist.

Der weiteren Formstabilisierung dient die Maßnahme, daß in die Hülse vor den Boden eine querschnittsgleiche, bodenseitige Pappescheibe eingesetzt ist.

Die Pappescheiben können angeklebt, aufgesiegelt oder eingerastet sein. In jedem Fall ist aber zumindest die deckelseitige Pappescheibe lösbar befestigt und mit einer Grifflasche versehen, so daß sie vor dem Aufsetzen der Abgabeeinrichtung entfernt werden kann. Die Hülse wird dann durch die Kappe der Abgabeeinrichtung und die gegebenenfalls vorgesehene bodenseitige Pappescheibe auch während des Gebrauchs stabilisiert.

In weiterhin vorteilhafter Ausgestaltung ist vorgesehen, daß die aufbrechbare Öffnung an der Verschlußmembran in der Metallfolie bzw. in dem Karton- oder Papierverbundmaterial vorgestanzt und mit einer angesiegelten Folie oder durch die innen liegende, siegelfähige Kunststoffschicht der Verschlußmembran verschlossen ist.

Bei bekannten Getränkeverpackungen ist es an sich bekannt, den Behälter mit einer durch eine angesiegelte Folie verschlossenen Öffnung zu versehen, um beispielsweise einen Trinkhalm einführen zu können. Bei der erfindungsgemäßen Ausbildung erfüllt die versiegelte Öffnung die Aufgabe, das Tauchrohr der Sprüheinrichtung aufzunehmen. Bei einer annähernd querschnittsgleichen Ausbildung von Öffnung und Tauchrohr wird dieses zusätzlich positioniert und zentriert. Die Öffnung kann aber auch größer ausgebildet sein, um beim Kippen der Verpackung eventuell in den Raum zwischen Verschlußmembran und Kappe übertretende Flüssigkeit zurück fließen zu lassen. Zu dem gleichen Zweck kann es günstig sein, auch die Verschlußmembran mit einer Senke zu versehen.

Die Öffnung ist zweckmäßigerweise außenseitig durch eine abnehmbare, beispielsweise aufgeklebte Abdeckung verschlossen, um sie vor einem unzeitigen Aufbrechen zu schützen.

In einer bevorzugten Ausführung ist vorgesehen, daß die halslose Hülse an ihrer Stirnseite mit der Verschlußmembran unter Bildung eines Rastrandes für die Kappe nach außen aufgeweitet ist. Durch die Aufweitung der Öffnung an der einen halslosen Stirnseite der Hülse entsteht eine Art äußerer Ringwulst, die zum Aufsetzen der Kappe der Abgabeeinrichtung dient. Dabei ist es insbesondere möglich, an dem Rastrand eine ausreichend gute Abdichtung zu erzielen, um das Abpumpen des Inhalts mittels einer Sprüheinrichtung zu ermöglichen. Es ist ferner möglich, in einer Erstausstattung den Behälter gleich mit einer Abgabeeinrichtung zu versehen, so daß der Verbraucher nach dem Erwerb einer solchen Verpackung später nur noch einzelne Behälter mit dem Produkt kaufen muß, die Abgabeeinrichtung hingegen immer wieder einsetzen kann.

Um einen dichten Verschluß, insbesondere bei Erstverkauf der Verpackung mit der eingesetzten Abgabeeinrichtung zu erhalten, weist in einer bevorzugten Ausführungsform die Kappe einen den Rastrand der Hülse außen- und innenseitig übergreifenden, federnden Randflansch auf. Ein solcher federnder Übergriff ermöglicht einerseits das Aufsetzen der Abgabeeinrichtung auf den Behälter und führt andererseits innenseitig zu einem dichten Randabschluß, der das Austreten oder Verdunsten des Verpackungsgutes bei aufgesetzter Abgabeeinrichtung verhindert.

Mit Vorteil ist vorgesehen, daß der Randflansch von einer der Hülse innen dichtend anliegenden Ringlippe und einem die Hülse außenseitig federnd übergreifenden Rastring gebildet ist.

Die Abdichtung kann gemäß einem weiteren Ausführungsbeispiel noch dadurch verbessert werden, daß der Randflansch von einem formstabilen Überwurfring übergriffen ist.

Der formstabile Überwurfring wird nach dem Aufsetzen der Kappe über den Randflansch gepreßt oder auch auf ein entsprechendes Außengewinde des Randflanschs aufgeschraubt, so daß der außen liegende Teil des Randflanschs nicht auffedern kann und die Kappe und damit die Abgabeeinrichtung fest am Behälter fixiert ist. Auch diese Ausbildung empfiehlt sich insbesondere dann, wenn der Behälter mit aufgesetzter Abgabeeinrichtung als Verkaufsverpackung angeboten wird.

Statt dessen kann auch vorgesehen sein, daß an der Stirnseite der halslosen Hülse ein ringförmiges Deckelteil aus Kunststoff angeschweißt, angeklebt oder aufgespritzt ist, dessen Ringöffnung mit der Verschlußmembran verschlossen und an dem die Abgabeeinrichtung mit ihrer Kappe festlegbar ist.

Bei dieser Ausführung ist die Verschlußmembran also nicht unmittelbar an der Hülse des Behälters, sondern an dem Deckelteil befestigt. Das angeklebte, angeschweißte oder aufgespritzte Deckelteil wirkt zugleich als Versteifungsring für die Hülse, so daß diese sich relativ dünnwandig und damit materialsparend herstellen läßt. Gleiches gilt dann, wenn das Deckelteil aufgespritzt wird, da in diesem Fall auch für das Deckelteil ein geringerer Materialeinsatz als bei getrennter Fertigung möglich ist.

Mit Vorzug ist vorgesehen, daß das ringförmige Deckelteil einen in die Hülse des Behälters ragenden hülsenförmigen Ansatz aufweist, mit dem sie durch Schweißen, Kleben oder Aufspritzen an der Hülse befestigt ist. Mit dieser Ausbildung erfolgt die Abdichtung an der Innenseite des Behälters, so daß das Verpackungsgut nicht an die Stirnkante, an der in der Regel eine freie Schnittkante des Verbundmaterials vorhanden ist, vordringen kann.

Ein weiteres vorteilhaftes Ausführungsbeispiel zeichnet sich dadurch aus, daß das ringförmige Deckelteil aus einem mit der innenseitigen Kunststoffschicht der Hülse verschweißbaren bzw. siegelbaren Kunststoff besteht. Auf diese Weise lassen sich Hülse und Deckelteil problemlos verschweißen, sei es durch bloße Erwärmung bei Einsatz eines gesondert hergestellten Deckelteils oder auch beim Aufspritzen des Deckelteils. Dabei bietet das Aufspritzen den Vorteil, daß Ungleichmäßigkeiten der Wandung der Hülse, die bei dem Verbundmaterial stets gegeben sind, insbesondere, wenn die Hülse im gebräuchlichen Wickelverfahren hergestellt wird, ausgeglichen werden.

Ein weiteres vorteilhaftes Ausführungsbeispiel zeichnet sich dadurch aus, daß in der Erstausstattung der Verpackung einen die Kappe und die Hülse außenseitig umfassender Originalitätsverschluß vorgesehen ist, der in beliebiger bekannter Weise ausgebildet, beispielsweise ein über Sollbruchstege mit dem Randflansch verbundener Sicherungsring sein kann.

Der erfindungsgemäß ausgebildete Behälter kann im wesentlichen, zumindest zu 75 %, vorzugsweise bis zu 90 % aus Recycling-Papier bzw. -Karton bestehen. Damit läßt sich der erfindungsgemäß ausgebildete Behälter nicht nur aus preiswerten Altstoffen herstellen, sondern mit gleichermaßen großem Gewichtsanteil in Müllverbrennungsanlagen wieder energetisch verwerten.

Die Erfindung betrifft ferner eine Verpackung, bestehend aus einer Hülse aus Karton- bzw. Papierverbundmaterial mit einem angesiegelten Boden und einer an der gegenüberliegenden Stirnseite angesiegelten Verschlußmembran, die ganz oder teilweise zu öffnen ist, sowie einer die Hülse mit der Verschlußmembran übergreifenden Kappe, die insbesondere, aber nicht ausschließlich, in Verbindung mit einer Abgabeeinrichtung verwendbar ist. Eine Kappe für einen solchen Behälter zeichnet sich erfindungsgemäß dadurch aus, daß sie einen Randflansch in Form eines die Hülse außenseitig übergreifenden Schneidrings aufweist, der sich beim Aufdrehen auf die Hülse in das Verbundmaterial einschneidet.

Bei dieser Ausbildung der Kappe macht sich die Erfindung die Tatsache zunutze, daß das Karton- bzw. Papierverbundmaterial relativ weich und nachgiebig, insbesondere auch leicht bleibend verformbar ist. Durch Aufdrehen der Kappe auf die Hülse arbeitet sich der Schneidring in das Verbundmaterial gewindeartig ein, so daß die Kappe auf der Hülse einen festen Sitz erhält. Dabei läßt sich der Schneidring ferner so ausbilden, daß - auch bei geöffneter Verschlußmembran - zugleich ein dichter Abschluß für den Behälter gegeben ist. Eine solche Kappe läßt sich für zylindrische Behälter beliebiger Ausbildung aus Karton-bzw. Papierverbundmaterial und mit beliebigem Füllgut verwenden. Sie ist insbesondere aber auch geeignet, die zuvor beschriebene Kappe der Abgabeeinrichtung zu bilden und nach dessen Aufsetzen auf den Behälter aufgedreht zu werden, um die Abgabeeinrichtung an der Hülse festzulegen. Nach Entleeren des Behälters läßt sich die Abgabeeinrichtung in ebenso einfacher Weise entfernen und auf den nächsten gefüllten Behälter wieder aufsetzen. Dient die Kappe bei spielsweise zum Verschließen von Behältern mit anderem Verbrauchsgut, kann auch sie wieder verwendet werden, während der Behälter selbst nach dem Entleeren weggeworfen wird.

Mit Vorzug weist der Schneidring ein mehrgängiges Innengewinde auf, wobei jeder Gewindegang zweckmäßigerweise eine relativ große Steigung besitzt, um mit einer oder wenigen Umdrehungen die Kappe am Behälter festzulegen und eine besonders effektive Abdichtung zu erzielen.

Es ist weiterhin von Vorteil, wenn das Innengewinde einen von der freien Stirnseite der Kappe nach innen abnehmenden Innendurchmesser bei zunehmender Gangtiefe aufweist. In Verbindung mit der weiteren Maßnahme, daß mit Abstand vom Innengewinde an der Kappe innenseitig ein Stützring angeordnet ist, und daß der Abstand zwischen Innengewinde und Stützring zumindest im Bereich des kleinsten Innendurchmessers des Innengewindes kleiner ist als die Wandstärke der Hülse, ergibt sich der große Vorteil, daß einerseits das Aufschrauben des Schneidrings erleichtert wird, andererseits die Hülse zwischen Gewinde und Stützring gequetscht wird, so daß eine einwandfreie Abdichtung erhalten wird.

In einer abgewandelten Ausführungsform ist vorgesehen, daß die Hülse zumindest in dem von dem Schneidring übergriffenen Bereich eine größere Nachgiebigkeit aufweist. Durch diese Ausbildung kann die Verformbarkeit der Hülse in ihrem die Kappe aufnehmenden Bereich verbessert werden, so daß sich die Kappe leichter und wirksamer auf die Hülse aufdrehen läßt.

Die vorgenannte Ausführungsform läßt sich in mehrfacher Weise, beispielsweise dadurch verwirklichen, daß die Hülse zumindest in dem vom Schneidring übergriffenen Bereich eine größere Wandstärke aufweist. Eine solche größere Wandstärke läßt sich am einfachsten dadurch erzeugen, daß die Hülse in dem von dem Schneidring übergriffenen Bereich mit einer Bandage versehen ist, wobei die Bandage auf die Hülse aufgesiegelt, aufgeklebt oder aufgeschweißt sein und gegebenenfalls zusätzlich aus einem weicheren Werkstoff bestehen kann.

Statt dessen ist es natürlich auch denkbar, daß die Hülse außenseitig eine weichere Schicht aufweist, die beispielsweise aus einer dünnen kaschierten Schaumstoffolie, einer weichen Papierlage, gegebenenfalls auch durch das auf die Hülse aufgebrachte Etikettenmaterial gebildet sein kann.

Um das Aufdrehen des Schneidrings zu erleichtern, kann vorgesehen sein, daß die Hülse außenseitig im Bereich des von dem Schneidring übergriffenen Bereichs mit Einlaufrillen für das Innengewinde des Schneidrings versehen ist.

Ist der Behälter mit einer metallischen Verschlußmembran versehen, die mit ihrem Rand auf der Außenseite der Hülse angesiegelt ist, so kann es im Einzelfall besonders schwierig sein, die Kappe mit dem Schneidring auf die Hülse aufzudrehen. In diesem Fall kann zumindest der Membranrand mit eingeformten Einlaufrillen für den Schneidring versehen sein. Die Einlaufrillen lassen sich problemlos durch Pressen oder Rollen in die Hülse und/oder in den Rand der Verschlußmembran einformen. Mit diesen Einlaufrillen ist zugleich eine Führung für das Aufschrauben der Kappe gegeben.

Statt dessen oder zusätzlich läßt sich das Aufschrauben der Kappe auch dadurch erleichtern, daß bei Verwendung einer metallischen Verschlußmembran, die mit ihrem Rand auf der Außenseite der Hülse angesiegelt ist, die Hülse über die Höhe dieses Randes einen geringeren Außendurchmesser aufweist, und daß der Schneidring eine größere Höhe als der Rand der Verschlußmembran aufweist, so daß er unterhalb dieses Randes in die Hülse einschneidet. Bei dieser Ausführungsform wird also der Rand der Verschlußmembran von der Kappe lediglich übergriffen und der Schneidring in die frei liegende Außenseite der Hülse eingedreht.

Die vorgenannte Kappe kann eine der Hülse innenseitig dichtend anliegende Ringlippe aufweisen. Statt dessen kann natürlich auch in die Kappe in herkömmlicher Weise eine Ringdichtung eingelegt sein.

Nachstehend ist die Erfindung anhand von in der Zeichnung wiedergegebenen Ausführungsbeispielen beschrieben. In der Zeichnung zeigen:

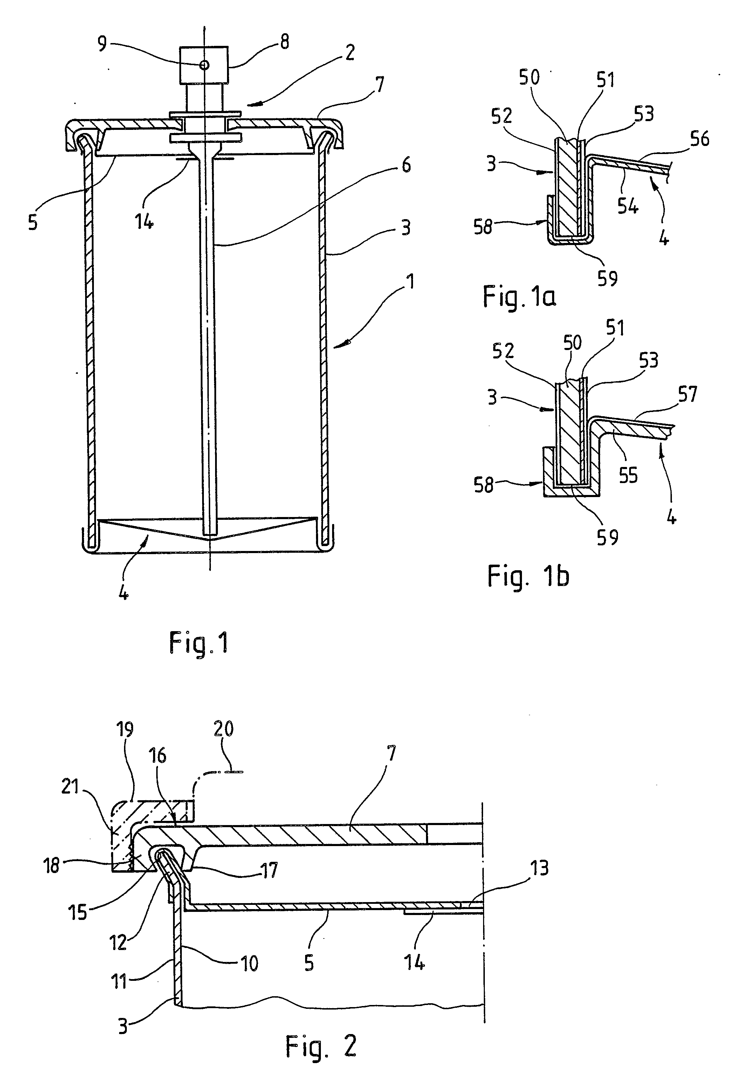

Figur 1 einen Schnitt durch die gebrauchsfertige Verpackung;

Figur 1 a, b einen vergrößerten Detailschnitt im Bereich des Bodens;

Figur 2 einen Detailschnitt im Bereich der oberen Verschlußmembran;

Figur 3 eine der Figur 1 ähnliche Darstellung einer abgewandelten Ausführungsform;

Figur 4 eine unterbrochene Darstellung einer Ausführungsform der Verpackung in Erstausstattung;

Figur 5 eine Ansicht auf eine Ausführungsform des Bodens der Verpackung;

Figur 6 eine abgebrochene Darstellung einer weiteren Ausführungsform der Verpackung;

Figur 7 einen Ausschnitt aus einer Verpackung in einer gegenüber Figur 6 abgewandelten Ausführung;

Figur 8 eine gegenüber Figur 7 weiterhin abgewandelte Ausführung;

Figur 9 einen Ausschnitt einer Verpackung in einer weiteren Variante der Ausführungsform gemäß Figur 6;

Figur 10 einen der Figur 8 entsprechenden Ausschnitt mit Einlaufrillen an der Verschlußmembran und

Figur 11 einen Ausschnitt einer Verpackung in einer anderen Ausgestaltung.

Die in Fig.1 dargestellte Verpackung für fließfähige, insbesondere flüssige Produkte weist einen Behälter 1 und eine Abgabeeinrichtung 2 in Form einer Sprüheinrichtung auf. Der Behälter 1 besteht aus einer zylindrischen, z. B. kreiszylindrischen, ovalen oder auch aus einer mehreckigen Hülse 3, einem Boden 4 und einer den oberen Verschluß bildenden Verschlußmembran 5. Die Sprüheinrichtung 2 weist ein Tauchrohr 6, das bis zum Boden der Verpackung reicht, und eine Kappe 7 auf, die auf den Behälter 1 aufgesetzt ist. Die Sprüheinrichtung 2 besitzt ferner eine Handhabe 8 in Form eines Druckknopfs, durch dessen Betätigung eine nicht gezeigte Pumpe angetrieben wird, die die im Behälter 1 befindliche Flüssigkeit zu einer Zerstäubungsdüse 9 fördert.

Die Hülse 3 ist, wie aus Fig.1a und 1b ersichtlich, aus einem gegebenenfalls mehrschichtigen Karton- oder Papierverbundlaminat 50 hergestellt und weist im Falle flüssiger, pastöser oder feuchtigkeitsempflindlicher Füllgüter eine Schicht 51 als Flüssigkeitssperrschicht auf, die beispielsweise aus einer Metallfolie besteht. Diese wiederum kann innen- oder außenseitig oder innerhalb des Karton- oder Papierverbundlaminates angeordnet sein. Die Hülse 3 ist an ihrer Innenseite 10 und ggfls. an ihrer Außenseite 11 mit einer siegelfähigen Kunststoffbeschichtung 52 bzw. 53 versehen, mit der der Boden 4 und die Verschlußmembran 5 thermisch oder durch Hochfrequenz versiegelt werden können. Zu diesem Zweck ist der Boden 4, wie Fig.1a zeigt, wie auch die Verschlußmembran 5, in Form einer Membran als Tiefziehteil aus einer Metallfolie 54 oder gleichfalls aus Kartonverbund 55 (Fig.1b) mit einer siegelfähigen Kunststoffbeschichtung 56 bzw. 57 hergestellt und mit seinem Rand 58 um die Stirnseite 59 der Hülse 3 umgebördelt und innen- und außenseitig angesiegelt.

Die Verschlußmembran 5 weist in ihrem Zentrum eine vorbereitete Öffnung 13 auf, die durch eine an der Rückseite der Verschlußmembran 5 angesiegelte Folie 14 verschlossen und ggfls. durch eine nicht gezeigte Abdeckung nach außen geschützt ist. Statt des gezeigten Folienabschnittes 14 kann der Verschluß der Öffnung 13 auch unmittelbar von der siegelfähigen Innenbeschichtung der Verschlußmembran 5 gebildet sein.

Der stirnseitige Rand 12 der Hülse 3 ist, wie aus Fig.2 ersichtlich, durch Aufweiten der stirnseitigen Öffnung nach außen gebogen, so daß ein Rastrand 15 für die Kappe 7 der Sprüheinrichtung 2 entsteht. Die Kappe 7 weist zu diesem Zweck einen Randflansch 16 auf, der von einer innenseitig angeordneten Ringlippe 17 und einem außenseitig angeordneten Rastring 18 gebildet ist. Die Ringlippe 17 ist nahezu starr ausgebildet, um eine Dichtungsfunktion erfüllen zu können, während der Rastring 18 in radialer Richtung ausfedern kann, so daß die Kappe 7 auf den Rastrand 15 aufgeschnappt werden kann, wobei insbesondere die Ringlippe 17 für einen dichten Verschluß sorgt. Um ein Aufspreizen des Rastrings 18 zu vermeiden, kann insbesondere dann, wenn die komplette Einheit aus Behälter 1 und Sprüheinrichtung 2 als Verkaufsverpackung angeboten wird, ein formstabiler Überwurfring 19 vorgesehen sein, der an einem entsprechenden Aufsatz 20 der Kappe 7 geführt ist und mit einem nach unten greifenden Ringteil 21 den Rastring 18 übergreift. Dieser Überwurfring 1 kann als Schiebeteil ausgebildet sein oder auch ein Innengewinde aufweisen, das mit einem entsprechenden Außengewinde am Rastring 18 zusammenwirkt.

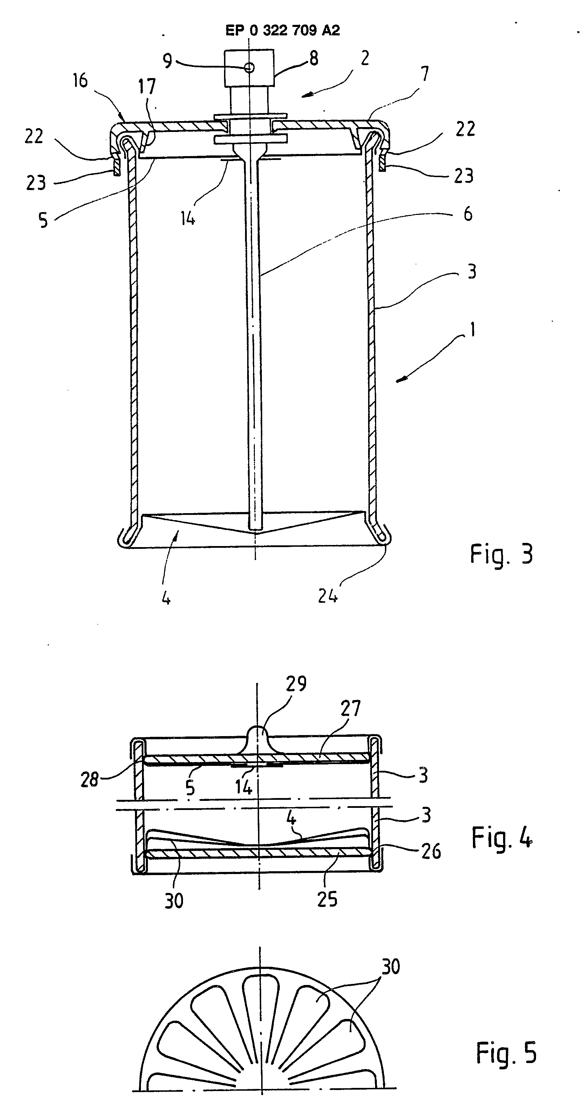

Bei dem Ausführungsbeispiel gemäß Figur 3 ist an dem Randflansch 16 über Sollbruchstege 22 ein Sicherungsring 23 angebracht, der ein unzeitiges Abheben der Kappe 7 verhindert und zugleich als Originalitätsverschluß dient. Um nach dem Leeren des Behälters 1 die Sprüheinrichtung abnehmen und wiederverwenden zu können, wird der Sicherungsring 23 abgerissen, so daß sich die Kappe 7 mit der Sprüheinrichtung 2 abnehmen läßt. Wie Figur 3 ferner zeigt, ist die Hülse 3 auch an ihrer bodenseitigen Stirnseite aufgeweitet, um auf diese Weise einen vergrößerten Standring 24 zu bilden, der sich insbesondere bei Behältern mit einem großen Verhältnis von Höhe zu Durchmesser empfiehlt.

Um die geringe Formstabilität der Verpackung, insbesondere der Hülse zu verbessern, kann am Boden 4 eine Pappescheibe 25 eingesetzt sein (Figur 4), die beispielsweise in eine eingepreßte Rille 26 eingerastet oder in sonstiger Weise an der Hülse 3 befestigt ist. Ebenso kann bei Nachlieferpackungen ohne die Sprühreinrichtung 2 auch auf die Verschlußmembran 5 eine Pappescheibe 27 aufgesetzt und in einer eingepreßten Rille eingerastet sein. Die Pappescheibe 27 muß lösbar sein, zu welchem Zweck sie eine Grifflasche 29 aufweist, nach deren Entfernung die Sprüheinrichtung 2 eingesetzt werden kann.

Um für den membranartigen Boden 4 eine bessere Formhaltigkeit bei geringer Wandstärke zu erhalten, kann, wie aus Figur 5 ersichtlich, eine radialsymmetrische Prägung 30 eingeformt sein.

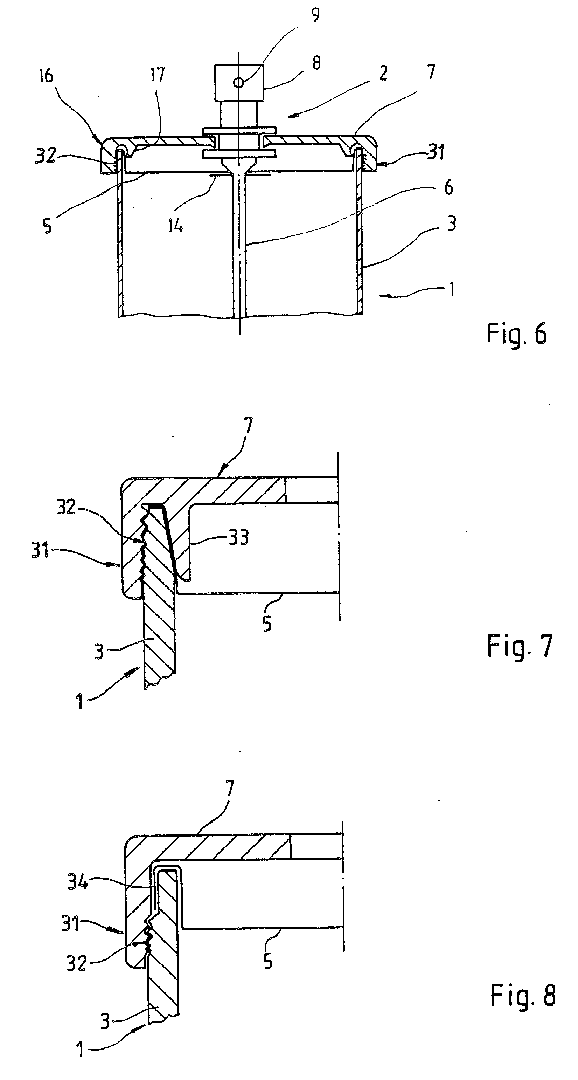

Figur 6 zeigt eine Ausführungsform, bei der die Hülse 3 zumindest an ihrer oberen Stirnseite mit dem Hülsendurchmesser zylindrisch ausläuft. Die Kappe 7 weist einen Randflansch 16 auf, der wiederum mit einer inneren Ringlippe 17 versehen ist, die als Abdichtung wirkt. Der die Hülse außenseitig übergreifende Teil der Kappe 7 ist im Gegensatz zu den vorgenannten Ausführungsformen starr und als Schneidring 31 ausgebildet. Er weist in der gezeigten Ausführung ein mehrgängiges Innengewinde 32 auf, das sich beim Aufdrehen der Kappe 7 auf die Hülse 3 in das relativ weiche Verbundmaterial einschneidet. Eine zusätzliche Abdichtung erfolgt innenseitig mittels der Ringlippe 17. Um das Aufschrauben zu erleichtern, kann die Kappe 7 außenseitig mit einem Profil versehen sein.

Figur 7 zeigt eine Ausführungsform mit einer Kappe 7, wie sie auch für andere Behälter gleichen Aufbaus verwendbar ist. Sie weist wiederum einen Schneidring 31 auf, doch ist das Gewinde 32, wie aus der Zeichnung ersichtlich, mit nach innen zunehmender Gangtiefe und abnehmendem Innendurchmesser ausgebildet. Mit Abstand von dem Innengewinde ist an der Kappe 7 ein Stützring 33 angeformt. Der so zwischen dem Stützring 33 und dem Innengewinde 32 gebildete Spalt verengt sich von der freien Stirnseite der Kappe nach innen auf eine Breite, die geringer ist als die Wandstärke der Hülse 3, so daß diese beim Aufdrehen des Schneidrings 31 gequetscht wird. Auf diese Weise wird ein auch nach mehrmaligem Gebrauch dichter Abschluß des Behälters 1 erhalten. Bei dieser Ausführungsform endet der Rand der Verschlußmembran an der oberen Stirnseite der Hülse.

Bei dem Ausführungsbeispiel nach Figur 8 weist die Hülse im Bereich des von dem Rand 34 der Verschlußmembran übergriffenen Bereichs einen geringeren Außendurchmesser als im übrigen Bereich auf, die Außenseite ist also nach innen zurückgesetzt. Der Schneidring 31 ist in diesem Fall tiefer an der Kappe 7 angesetzt, so daß das Innengewinde 32 nur in das Material der Hülse 3, nicht aber in das wesentlich härtere Material der Verschlußmembran 5 eingedreht werden muß.

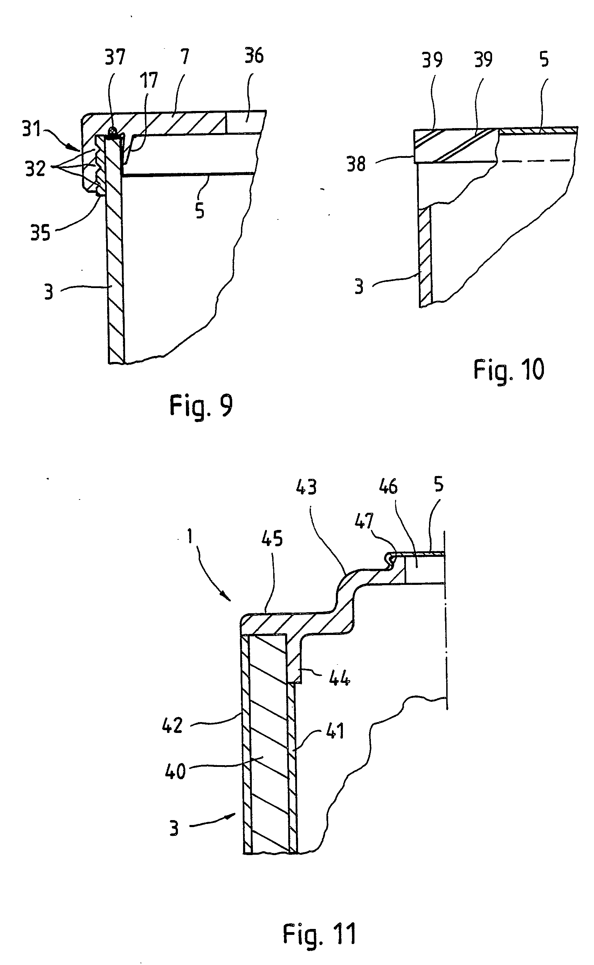

Bei dem Ausführungsbeispiel gemäß Figur 9 weist die Kappe 7 wiederum einen die Hülse 3 außenseitig übergreifenden Schneidring 31 mit einem mehrgängigen, steilen Gewinde 32 auf. Die Hülse 3 ist jedoch in ihrem Randbereich außenseitig mit einer Bandage 35 versehen, die einerseits den Randbereich stabilisiert, andererseits aber zu einer größeren Nachgiebigkeit und Verformbarkeit im Außenbereich führt, so daß der Schneidring 31 sich leichter aufdrehen läßt. Die Kappe 7 kann in einem zentrischen Loch 36 einen Spendereinsatz 2 aufnehmen. Die Bandage 35 kann aus dem gleichen Verbundmaterial, wie die Hülse 3 oder aber aus einem anderen, insbesondere einem weicheren Werkstoff bestehen.

Es kann ferner zwischen der Kappe 7 und der oberen Stirnkante der Hülse 3 bzw. dem dort befestigten Rand der Verschlußmembran eine Dichtung 37 eingelegt sein, um bei geschlossener Kappe 7 einen dichten Abschluß im Randbereich zu erhalten.

In Figur 10 ist ein Behälter mit einer Hülse 3 gezeigt, auf deren Stirnseite eine Verschlußmembran 5 aufgesiegelt ist, indem die Verschlußmembran 5 mit ihrem Rand 38 über die Hülse 3 nach außen umgelegt und an die äußere Kunststoffbeschichtung der Hülse 3 angesiegelt ist. Um auch in diesem Fall ein leichtes Aufdrehen einer Kappe 7 mit Schneidring 31 zu ermöglichen, können in den übergreifenden Rand 38 der Verschlußmembran 5, gegebenenfalls auch in die anschließende Hülsen-Außenseite, Einlaufrillen 39 eingeformt sein.

Figur 11 zeigt ein Ausführungsbeispiel eines Behälters 1, dessen Hülse 3 einen Kern 40 aus gegebenenfalls mehrlagigen Papier-oder Kartonschichten, gegebenenfalls auch mit einer metallischen Sperrschicht aufweist. Dieser Kern 40 ist, wie bereits eingangs beschrieben, an seiner Innenseits mit einer Kunststoffbeschichtung 41 und gegebenenfalls auch an seiner Außenseite mit einer Kunststoffbeschichtung 42 versehen. Auf die Stirnseite der halslosen Hülse 3 ist ein ringförmiges Deckelteil 43 aufgespritzt, das aus einem zu der innenseitigen Kunststoffbeschichtung 41 affinen Kunststoff besteht, so daß die Innenbeschichtung 41 und das Deckelteil 43 im Bereich dessen hülsenförmigen Ansatzes 44, der in die Hülse 3 hineingreift, miteinander verschmelzen. Die freie Stirnkante der Hülse 3, insbesondere des Kerns 40 wird von einem übergreifenden Rand 45 des Deckelteils 43 dichtend abgedeckt. Das Deckelteil 43 weist wiederum eine zentrische Öffnung 46 auf, die durch eine Verschlußmembran 5 verschlossen ist und zur Aufnahme einer Abgabeeinrichtung 2 dienen kann. Zu diesem Zweck weist das Deckelteil 43 einen Wulst 47 auf, hinter den die Kappe der Abgabeeinrichtung eingerastet werden kann.

Wie bereits angedeutet kann die Abgabeeinrichtung je nach Füllgut eine Sprühreinrichtung, eine Streueinrichtung, eine Ausdrückeinrichtung od. dgl. sein. Der Behälter 1 kann auch als Nachfüllpackung für mechanisch arbeitende Sprüh- und Verteileinrichtungen dienen.

## Ansprüche

1. Verpackung zur Abgabe fließfähiger Produkte, bestehend aus einem das Produkt aufnehmenden Behälter mit einem Verschluß und einer wiederverwendbaren Abgabeeinrichtung, die eine nach dem Öffnen des Verschlusses auf den Behälter dichtend aufsetzbare Kappe aufweist, dadurch gekennzeichnet, daß der Behälter (1) aus einer Hülse (3) aus Karton- bzw. Papierverbundmaterial und wenigstens einer innenseitig angeordneten siegelfähigen Kunststoffschicht, einem an die Hülse innenseitig angesiegelten Boden (4) und einer an der gegenüberliegenden Stirnseite (12) angesiegelten Verschlußmembran (5), die ganz oder teilweise zu öffnen ist, besteht, und daß die Abgabeeinrichtung (2) mittels der Kappe (7) an der Stirnseite (12) der Hülse (3) festlegbar ist.

2. Verpackung nach Anspruch 1 zur dosierten Abgabe fließfähiger Produkte, dadurch gekennzeichnet, daß die Abgabeeinrichtung (2) als handbetätigte Dosiereinrichtung ausgebildet ist.

3. Verpackung nach Anspruch 1 oder 2 zur dosierten Abgabe rieselfähiger Produkte, dadurch gekennzeichnet, daß die handbetätige Dosiereinrichtung eine Streueinrichtung ist.

4. Verpackung nach Anspruch 1 oder 2 zur dosierten Abgabe flüssiger bis pastöser Produkte, dadurch gekennzeichnet, daß die Hülse (3) aus Karton- bzw. Papierverbundmaterial eine beispielsweise metallische Flüssigkeitssperrschicht aufweist.

5. Verpackung nach einem der Ansprüche 1, 2 oder 4, dadurch gekennzeichnet, daß die Abgabeeinrichtung (2) eine Sprüheinrichtung mit einer Handpumpe ist, die ein bis nahe zum Boden reichendes Tauchrohr (6) aufweist.

6. Verpackung nach einem der Ansprüche 1 bis 5, dadurch gekennzeichnet, daß die Verschlußmembran (5) eine vorbereitete, aufbrechbare Öffnung (13) aufweist.

7. Verpackung nach einem der Ansprüche 1 bis 6, dadurch gekennzeichnet, daß die Verschlußmembran (3) und/oder der Boden (4) aus einer Metallfolie und wenigstens einer innenseitig angeordneten, siegelfähigen Kunststoffschicht besteht.

8. Verpackung nach einem der Ansprüche 1 bis 6, dadurch gekennzeichnet, daß die Verschlußmembran (3) und/oder der Boden (4) aus einem Karton- oder Papierverbund material mit wenigstens einer innenseitig angeordneten, siegelfähigen Kunststoffschicht besteht.

9. Verpackung nach einem der Ansprüche 1 bis 8, dadurch gekennzeichnet, daß die Verschlußmembran (5) und/oder der Boden nach innen in die Hülse (3) eingezogen und innen- und außenseitig an die Hülse (3) angesiegelt ist.

10. Verpackung nach einem der Ansprüche 1 bis 9, dadurch gekennzeichnet, daß der Boden (4) des Behälters (1) zum Zentrum hin zu einer Senke geneigt ist.

11. Verpackung nach einem der Ansprüche 1 bis 10, dadurch gekennzeichnet, daß der Boden (4) mit einer im wesentlichen radial verlaufenden Prägung (30) versehen ist.

12. Verpackung nach einem der Ansprüche 1 bis 11, dadurch gekennzeichnet, daß in die Hülse (3) vor die Verschlußmembran (5) eine querschnittsgleiche, deckelseitige Pappescheibe (27) eingesetzt ist.

13. Verpackung nach einem der Ansprüche 1 bis 12, dadurch gekennzeichnet, daß in die Hülse (3) vor den Boden (4) eine querschnittsgleiche bodenseitige Pappescheibe (25) eingesetzt ist.

14. Verpackung nach Anspruch 12 oder 13, dadurch gekennzeichnet, daß zumindest die deckelseitige Pappescheibe (27) lösbar eingesetzt und mit einer Grifflasche (29) versehen ist.

15. Verpackung nach einem der Ansprüche 1 bis 14, dadurch gekennzeichnet, daß die aufbrechbare Öffnung (13) an der Verschlußmembran (5) in der Metallfolie bzw. in dem Karton- oder Papierverbundmaterial vorgestanzt und mit einer angesiegelten Folie (14) und/oder durch die innen liegende siegelfähige Kunststoffschicht der Verschlußmembran (5) verschlossen ist.

16. Verpackung nach einem der Ansprüche 1 bis 14, dadurch gekennzeichnet, daß die aufbrechbare Öffnung (13) außenseitig durch eine abnehmbare Abdeckung verschlossen ist.

17. Verpackung nach einem der Ansprüche 1 bis 16, dadurch gekennzeichnet, daß die halslose Hülse (3) an ihrer Stirnseite (12) mit der Verschlußmembran (5) unter Bildung eines Rastrandes (15) für die Kappe (7) nach außen aufgeweitet ist.

18. Verpackung nach einem der Ansprüche 1 bis 17, dadurch gekennzeichnet, daß die Kappe (7) einen den Rastrand (15) der Hülse (3) außen- und innenseitig übergreifenden, federnden Randflansch (16) aufweist.

19. Verpackung nach einem der Ansprüche 1 bis 18, dadurch gekennzeichnet, daß der Randflansch (16) von einer der Hülse (3) innen dichtend anliegenden Ringlippe (17) und einem die Hülse außenseitig federnd übergreifenden Rastring (18) gebildet ist.

20. Verpackung nach einem der Ansprüche 1 bis 19, dadurch gekennzeichnet, daß der Randflansch (16) von einem formstabilen Überwurfring (19) übergriffen ist.

21. Verpackung nach einem der Ansprüche 1 bis 20, dadurch gekennzeichnet, daß an der Stirnseite der halslosen Hülse (3) ein ringförmiges Deckelteil (43) aus Kunststoff angeschweißt, angeklebt oder aufgespritzt ist, dessen Ringöffnung (46) mit der Verschlußmembran (5) verschlossen und an dem die Abgabeeinrichtung (2) mit ihrer Kappe (7) festlegbar ist.

22. Verpackung nach Anspruch 21, dadurch gekennzeichnet, daß das ringförmige Deckelteil (43) einen in die Hülse (3) des Behälters (1) ragenden hülsenförmigen Ansatz (44) aufweist, mit dem es durch Schweißen, Kleben oder Aufspritzen an der Hülse (3) befestigt ist.

23. Verpackung nach Anspruch 21 oder 22, dadurch gekennzeichnet, daß das ringförmige Deckelteil (43) aus einem mit der innenseitigen Kunststoffschicht (41) der Hülse (3) verschweißbaren bzw. siegelbaren Kunststoff besteht.

24. Verpackung nach einem der Ansprüche 1 bis 23, dadurch gekennzeichnet, daß in der Erstausstattung der Verpackung ein die Kappe (7) und die Hülse (3) außenseitig umfassender Originalitätsverschluß (22, 23) vorgesehen ist.

25. Verpackung nach einem der Ansprüche 1 bis 24, dadurch gekennzeichnet, daß die Hülse (3) zur Erhöhung der Standsicherheit an ihrem bodenseitigen Stirnrand (24) aufgeweitet ist.

26. Verpackung nach einem der Ansprüche 1 bis 25, dadurch gekennzeichnet, daß der Behälter (1) im wesentlichen aus Recycling-Papier bzw. -Karton besteht.

27. Verpackung, bestehend aus einer Hülse aus Karton- bzw. Papierverbundmaterial mit einem angesiegelten Boden und einer an der gegenüberliegenden Stirnseite angesiegelten Verschlußmembran, die ganz oder teilweise zu öffnen ist, sowie einer die Hülse mit der Verschlußmembran übergreifenden Kappe, insbesondere Verpackung nach einem der Ansprüche 1 bis 20, 25 und 26, dadurch gekennzeichnet, daß die Kappe (7) einen Randflansch (16) in Form eines die Hülse (3) außenseitig übergreifenden Schneidrings (31) aufweist, der sich beim Aufdrehen auf die Hülse (3) in das Verbundmaterial einschneidet.

28. Verpackung nach Anspruch 27, dadurch gekennzeichnet, daß der Schneidring (31) ein mehrgängiges Innengewinde (32) aufweist.

29. Verpackung nach Anspruch 27 oder 28, dadurch gekennzeichnet, daß das Innengewinde (32) einen von der freien Stirnseite der Kappe (7) nach innen abnehmenden Innendurchmesser bei zunehmender Gangtiefe aufweist.

30. Verpackung nach einem der Ansprüche 27 bis 29, dadurch gekennzeichnet, daß mit Abstand vom Innengewinde (32) an der Kappe (7) innenseitig ein Stützring (33) angeordnet ist, und daß der Abstand zwischen Innengewinde (32) und Stützring (33) zumindest im Bereich des kleinsten Innendurchmessers des Innengewindes kleiner ist als die Wandstärke der Hülse (3).

31. Verpackung nach einem der Ansprüche 27 bis 30, dadurch gekennzeichnet, daß die Hülse (3) zumindest in dem von dem Schneidring (31) übergriffenen Bereich eine größere Nachgiebigkeit aufweist.

32. Verpackung nach einem der Ansprüche 27 bis 31, dadurch gekennzeichnet, daß die Hülse (3) zumindest in dem vom Schneidring (31) übergriffenen Bereich eine größere Wandstärke aufweist.

33. Verpackung nach einem der Ansprüche 27 bis 32, dadurch gekennzeichnet, daß die Hülse (3) in dem von dem Schneidring (31) übergriffenen Bereich mit einer Bandage (35) versehen ist.

34. Verpackung nach einem der Ansprüche 27 bis 33, dadurch gekennzeichnet, daß die Bandage (35) auf die Hülse (3) aufgesiegelt, aufgeklebt oder aufgeschweißt ist.

35. Verpackung nach einem der Ansprüche 27 bis 34, daß die Hülse (3) außenseitig eine weichere Schicht aufweist.

36. Verpackung nach einem der Ansprüche 27 bis 35, dadurch gekennzeichnet, daß die Hülse (3) außenseitig im Bereich des von dem Schneidring (31) übergriffenen Bereichs mit Einlaufrillen für das Innengewinde (32) des Schneidrings (31) versehen ist.

37. Verpackung nach einem der Ansprüche 27 bis 36, dadurch gekennzeichnet, daß bei Verwendung einer metallischen Verschlußmembran (5), die mit ihrem Rand (38) auf der Außenseite der Hülse (3) angesiegelt ist, zumindest der Membranrand (38) mit eingeformten Einlaufrillen (39) für das Innengewinde (32) des Schneidrings (31) versehen ist.

38. Verpackung nach einem der Ansprüche 27 bis 36, dadurch gekennzeichnet, daß bei Verwendung einer metal lischen Verschlußmembran (5), die mit ihrem Rand (34) auf der Außenseite der Hülse (3) angesiegelt ist, die Hülse über die Höhe dieses Randes einen geringeren Außendurchmesser aufweist, und daß der Schneidring (31) eine größere Höhe als der Rand der Verschlußmembran (5) aufweist, so daß er unterhalb dieses Randes in die Hülse (3) einschneidet.

39. Verpackung nach einem der Ansprüche 27 bis 38, dadurch gekennzeichnet, daß die Kappe (7) eine der Hülse (3) innenseitig dichtend anliegende Ringlippe (17) aufweist.

Fig.1

Fig. 1a

Fig. 1b

Fig. 2

Fig. 3

Fig. 4

Fig. 5

Fig. 6

Fig. 7

Fig. 8

Fig. 9

Fig. 10

Fig. 11